(19)

Europäisches
Patentamt
European
Patent Office
Office européen
des brevets

(11)  **EP 1 497 023 B1**

(12)  # EUROPEAN PATENT SPECIFICATION

(45) Date of publication and mention
of the grant of the patent:
**16.09.2009 Bulletin 2009/38**

(51) Int Cl.:
**B01J 19/08** (2006.01)   **B01D 53/44** (2006.01)
**B01D 53/48** (2006.01)   **B01D 53/72** (2006.01)
**B01D 53/32** (2006.01)

(21) Application number: **03745184.6**

(22) Date of filing: **24.03.2003**

(86) International application number:
**PCT/US2003/009089**

(87) International publication number:
**WO 2003/080234 (02.10.2003 Gazette 2003/40)**

(54) **METHOD FOR ABATEMENT OF VOC IN EXHAUST GASES BY WET PULSE CORONA DISCHARGE**

VERFAHREN ZUR VERRINGERUNG VON VOC IN ABGASEN DURCH NASSE IMPULSKORONAENTLADUNG

PROCEDE DE REDUCTION DE COMPOSES ORGANIQUES VOLATILES (COV) DANS DES GAZ D'ECHAPPEMENT PAR EFFET COURONNE A IMPULSIONS HUMIDES

(84) Designated Contracting States:
**AT BE BG CH CY CZ DE DK EE ES FI FR GB GR HU IE IT LI LU MC NL PT RO SE SI SK TR**

(30) Priority: **25.03.2002 US 367231 P**

(43) Date of publication of application:
**19.01.2005 Bulletin 2005/03**

(73) Proprietor: **THE BOARD OF TRUSTEES OF THE UNIVERSITY OF ILLINOIS**
**Chicago, IL 60612-7227 (US)**

(72) Inventors:
• **GUTSOL, Alexander**
**Malvern, PA 19355-8523 (US)**
• **FRIDMAN, Alexander**
**Naperville, IL 60564 (US)**
• **KENNEDY, Lawrence**
**Chicago, IL 60605 (US)**
• **SAVELIEV, Alexei**
**Chicago, IL 60605 (US)**

(74) Representative: **Smaggasgale, Gillian Helen et al**
**W.P. Thompson & Co,**
**55 Drury Lane**
**London WC2B 5SQ (GB)**

(56) References cited:
**US-A- 4 695 358**       **US-A- 5 637 198**
**US-A- 5 695 619**

• **MASUDA S ET AL: "Novel plasma chemical technologies - PPCP and SPCP for control of gaseous pollutants and air toxics" JOURNAL OF ELECTROSTATICS, ELSEVIER SCIENCE PUBLISHERS B.V. AMSTERDAM, NL, vol. 34, no. 4, May 1995 (1995-05), pages 415-438, XP004040928 ISSN: 0304-3886**
• **FUTAMURA S ET AL: "Towards understanding of VOC decomposition mechanisms using nonthermal plasmas" INDUSTRY APPLICATIONS CONFERENCE, 1995. THIRTIETH IAS ANNUAL MEETING, IAS '95., CONFERENCE RECORD OF THE 1995 IEEE ORLANDO, FL, USA 8-12 OCT. 1995, NEW YORK, NY, USA,IEEE, US, vol. 2, 8 October 1995 (1995-10-08), pages 1453-1458, XP010193172 ISBN: 0-7803-3008-0**
• **GROTHAUS M G ET AL: "Gaseous effluent treatment using a pulsed corona discharge" DIGEST OF TECHNICAL PAPERS. TENTH IEEE INTERNATIONAL PULSED POWER CONFERENCE (CAT. NO.95CH35833) IEEE, vol. 1, 1995, pages 124-132, XP002345774 NEW YORK, NY, USA ISBN: 0-7803-2791-8**

**Description**

CROSS-REFERENCE TO RELATED APPLICATION

This application claims priority from U.S. provisional application Serial No. 60/367,231 that was filed on March 25, 2002.

GOVERNMENTAL SUPPORT

The invention was made in the frame of a DOE sponsored project, Project Identification No. DE-FC07-00ID13868. The government has certain rights in the invention pursuant to that support.

DESCRIPTION

Low-temperature, non-equilibrium plasmas (also called "non-thermal" plasmas) are an emerging technology for abating diluting volatile organic compounds (VOC) emissions. These plasmas can be produced by a variety of electrical discharges or electron beams.

The basic feature of plasma technologies is that they produce plasma in which the majority of the electric energy (more than 99%) goes into production of energetic electrons, instead of heating the entire gas stream. These energetic electrons produce excited species, free radicals and ions) as well as additional electrons through the electron impact dissociation, excitation and ionization of the background molecules. These excited species, in turn, oxidize, reduce, or decompose the pollutant molecules.

This mechanism of VOC removal is in contrast to the mechanism involved in thermal processes (such as plasma torches or furnaces, regenerative thermal oxidation (RTO) and several chemical techniques) that require heating the entire gas stream in order to destroy pollutants. In addition, the low-temperature plasma technology is highly selective and has relatively low maintenance requirements. Its high selectivity results in relatively low energy costs for emissions control while low maintenance keeps annual operating expenses low. Furthermore, these plasma discharges are very uniform and homogeneous (except gliding arcs), which results in high process productivity.

As mentioned above, RTO is more effective at high concentrations of VOC. Plasma is normally used at lower concentrations of VOC and in the cases where combustion is not effective, such as removal of nitrogen oxides ($NO_x$) or sulfur-containing compounds. Scrubbing of exhaust gases with water might be required for both techniques, but some plasma reactors can be designed as a single unit with a scrubber to reduce the equipment cost.

The gliding arc is a high-pressure gas discharge with high electron temperature and density and has been proposed for chemical gas processing [Lesueur et al., J. de Physique 51: C557-C564, 1990]. The arc starts in a narrow gap between two or more diverging electrodes in a gas flow when the electric field in this gap reaches approximately 3 kV/mm in air [Raizer, Gas Discharge Physics, Berlin, Springer-Verlag, 1997]. Then the arc current increases very rapidly, and the voltage on the arc drops. If the gas flow is strong enough, it forces the arc to move along the diverging electrodes and to elongate.

The growing arc demands more power to sustain itself. At the moment when its resistance becomes equal to the total external resistance, the discharge consumes one-half of the power delivered by the source. This is the maximum power that can be transferred to the arc from the constant-voltage power supply. Next, the length continues increasing, but the supplied power is insufficient to balance the energy lost in heat transfer to the surrounding gas. The arc cools down and finally extinguishes. The next cycle starts immediately after the voltage reaches the breakdown value, usually just after the fading of the previous arc. (If the voltage is high enough, and the gap is very narrow, a new arc starts even before extinguishing of the old one [Pellerin et al., J. Physics D-Applied Physics, 33(19): 2407-2419, 2000]. A typical repetition rate of the arc is in the range from 10 Hz to 100 Hz and changes with the gas flow rate: the higher is the flow rate, the higher is the frequency.

Unlike regular high-current thermal arcs where both gas and electron temperatures ($T$ and $T_e$) could be as high as 10000K, the low-current (from 0.1 to 1 A) gliding arcs are believed to operate in non-equilibrium regimes ($T < T_e$), and have low gas temperatures. The arc voltage could be as high as several kilovolts.' Typical vibrational and translational temperatures of the gas in a low-temperature gliding arc were measured to be respectively about 2000 - 3000K and 800 - 2100 K [Czernihowski et al., Acta Physica Polonica A, 89: 595 -603, 1996]. Similar features are also intrinsic for microwave discharges; showing that low-current gliding arcs could be definitely useful for plasma chemistry.

The physics of the gliding arc evolution is not well understood, especially the development of non-equilibrium conditions and stability at diminishing currents. Older models [Mutaf-Yardimci et al., J. Applied Physics, 87: 1632-1641, 2000] did not account for variation of plasma conductivity and temperature during the gliding arc progress. This approach did not explain some recently discovered non-equilibrium effects in the low-current gliding arcs.

Mario Sobacchi [Sobacchi, M.G., "Hydrocarbon Processing in Non-equilibrium Gas Discharges", Master of Science Thesis, University of Illinois at Chicago, 2001] investigated the possibility of removal of specific chemical compounds with a low-current gliding arc discharge. A typical value of energy consumption for this discharge was 1 kW·hr/m$^3$, when the targeted value was 0.02 kW·hr/m$^3$. It was noted that non-uniformity of the discharge imposes certain difficulties to treat the gas efficiently. Experiments were performed using three different external resistance values; i.e., 25, 50, and 100 kW. The output voltage of the power supply was 10 kV, when the air flow rate ranged from 20 to 80 SLM.

Methanol (100 to 1000 ppm) was used as a substance to demonstrate viability of the gliding arc technology. In some runs, water was sprayed along the flow direction. It was found that at 20 SLM of air and independently of VOC concentration, all methanol was removed from the stream at power consumption of 0.2 kW·hr/m$^3$. No organic byproducts were detected by gas chromatography in the exhaust stream. The results were interpreted as encouraging, showing the possibility for further reduction of power consumption. Unfortunately, $NO_x$ was detected in the exhaust at level of 3000 ppm, much exceeding all reasonable limits. It could be expected, however, that for more non-equilibrium arcs with lower currents or higher flow rates of air, the temperature of the arc channel will be lower, and reasonable levels of $NO_x$ will be achieved.

Corona is a self-sustained electrical gas discharge that occurs only when the electric field is sharply non-uniform. The field near one or both the electrodes must be stronger than in the rest of the gap. This situation typically arises when the characteristic size r of the electrode to which the high voltage is applied, is much smaller than the inter-electrode distance d. If one considers a wire-into-cylinder configuration, the electric field in the space between the coaxial cylinders of radii r (internal cylinder) and R is given as a function of the radial coordinate x as:

$$E = \frac{V}{[x \ln(R/r)]}$$

where V is the voltage between the cylinders.

There is always some ionization in atmosphere due to high-energy particles coming from space. Existing electrons are accelerated by the electric field. They can ionize more molecules of the gas. New electrons are accelerated in the field, and so forth. Corona discharge occurs only when the value of the maximum electric field exceeds the breakdown field. For coaxial cylinders, the critical electric field of corona ignition in air is expressed by an empirical formula suggested by Peek (1929):

$$E_c = 31\delta\left(1 + \frac{0.308}{\sqrt{\delta r}}\right) \quad [\text{kV/cm}]$$

where $\delta$ is the ratio of air density to the density in standard pressure and temperature. It is clear that a constraint is imposed on the maximum field, which occurs on the surface of the sharp electrode, that is the high field or "corona carrying" electrode.

The formulae given above describe fairly well the physics of the corona with DC or slowly changing fields, such as in gas phase corona reactors (GPCR). For these applications, to be sustained at non-equilibrium state, the discharge can acquire only small power. Higher power would cause sparking and eventually lead to thermal arc formation.

Natural power limitations of DC corona technology gave rise to development of the pulsed corona technology. In a pulsed corona discharge, voltage is applied to the sharp electrode as a series of fast rising pulses. Incoming pulses generate a number of microdischarges (streamers); the faster the pulse, the more streamers are produced per unit length, increasing the power input per unit gas volume.

The width of the applied pulse must be minimized in order to avoid formation of spark discharge or thermalization of the streamers. For most geometries, then, the pulse rise time must be on the order of few nanoseconds and the duration of the pulse on the order of 100 ns.

The electron energy, in fact, depends on both the intensity of the electric field (i.e. on the voltage) and the mean free path. For a fast rising pulse, the mean electric field is very high (since the peak voltage is high), allowing the electrons to gain enough energy for the discharge to take place; however, since the duration of each pulse is much smaller than the interval between pulses, the mean required power is low (e.g., it is in the order of few Watts for the setups used for these experiments) even though the actual power of each single pulse is very high (about 1 MW). The negative polarity is predetermined by the existing equipment.

DC corona is a uniform discharge. In contrary, the pulsed corona is highly non-uniform. All the discharge power is localized in streamers. To describe the physics of the discharge, one must consider a phenomenon of a streamer as a whole. Electromagnetic model of physics in streamers must be coupled with chemistry of excited species, and with internal particles (electrons, photons) transport. This coupling is very difficult because of enormous amount of computational work. Simplified models were developed, but they are still not adequate for the purposes of trustworthy chemistry prediction. Many parameters are known with great degree of uncertainty, such as electron cross-sections.

There are numerous methods for the waste gases treatments from volatile organic compounds (VOC) with the help of electrical discharges, and particularly with the help of the pulsed corona discharge [Malik et al., Chinese J. Chem. Eng., 7(4) (1999)].

Masuda S. et al, in Novel Plasma Chemical Technologies - PPCP and SPCP for Control of Gaseous Pollutants and Air Toxics' - Journal of Electrostatics, Vol 34, Issue 4, May 1995, pages 415-438 determined that the pulse corona induced plasma chemical process (PPCP) and the surface discharge induced plasma chemical process (SPCP) represent technologies for generating active radicals under ordinary temperature and pressure for controlling gaseous pollutants such as NOx, SOx VOCs and air toxics such as Hg and other readily vaporized metals, trechloroethane, trichloroethylene, freons, toluene, dioxines, etc. as well as odors. PPCP and SPCP are completely dry processes having a simple construction, and their overall cost (both initial and running) is one of the lowest among the processes for control of gaseous pollutants. They can be combined with a wet ESP, a bag-filter with absorbent powder coat, a catalyst bed, or an active charcoal bed for the final removal of the reaction products.

To remove one large VOC molecule with the help of such methods it is necessary to produce several active radicals like OH. The energy price of one radical production is very high - about 50 eV per radical. As a result, total price of one VOC molecule removal (transformation of VOC molecule into $H_2O$ and $CO_2$) is also very high - about 300 eV. It is possible in this case to satisfy the industry demand to spend not more than about 10 W-Hour/$m^3$ of the waste gas only if VOC concentration is not higher than about 30 ppm. Real industrial waste streams such as that of the papermaking, metal cleaning and plating, plastics manufacture and the like industries have VOC contamination levels that are several times higher (e.g., about 100 to about 6000 ppm), so usual plasma methods for VOC removal are not applicable. The invention described hereinafter provides one method by which the latter, more highly loaded exhaust gas streams can be abated of VOC.

BRIEF SUMMARY OF THE INVENTION

The present invention contemplates a method for treating exhaust gas streams that contain one or more volatile organic compounds (VOC) to abate those VOCs.

Thus, according to one aspect of the present invention, there is provided a method for abatement of volatile organic compounds (VOC) in an exhaust as stream which comprises passing an exhaust gas stream through a pulsed corona discharge chamber in the presence of a spray of water droplets or a flowing film of water to form one or more oxidation products that dissolve in the water spray droplets or flowing film to thereby provide an effluent water stream and an effluent gas stream,

wherein (a) the pulsed corona discharges at a rate of about 0.01 to about 2 kHz, (b) the ratio of the water spray or flow rate to the exhaust gas flow is about 0.2 to about 2 milliliters/minute at one standard liter per minute of exhaust gas flow, and (c) an expenditure of not more than 50 eV per molecule of VOC is utilized, the method providing a destruction and removal efficiency of about 90 percent or more, thereby abating the VOC.

A contemplated method for abatement of VOCs in an exhaust gas stream comprises passing an exhaust gas stream containing about 60 to about 6000 ppm VOC, and more usually about 200 to about 3000 ppm, through a pulsed corona discharge chamber in the presence of a spray of water droplets or a flowing film of water to form one or more oxidation products that dissolve in the water spray droplets or film and provide an effluent water stream and an effluent gas stream. In the method, a contemplated pulsed corona discharges at a rate of about 0.01 to about 2 kHz. The ratio of the water spray rate to the exhaust gas flow is about 0.2 to about 2 milliliters/minute at one standard liter per minute of exhaust gas flow, and an expenditure of not more than 50 eV per molecule of VOC is utilized. This method provides a destruction and removal efficiency of about 90 percent or more, thereby abating the VOC. The method can operate at substantially any temperature with the understanding that lower temperatures typically provide slower reaction rates.

In some preferred embodiments, the method is utilized in part of a waste treatment system in which the relatively small amount of water that contains the dissolved oxidation products produced in this method is admixed with the relatively larger volume of industrial waste water produced by papermaking, metal cleaning or plating process or plastics manufacturing process. In another preferred embodiment, the method is utilized after the gas phase is contacted with water as a mist of particles about 0.1 to about 1 millimeter in diameter or liquid water to dissolve and thereby capture water-soluble VOC such as methanol and acetone. The effluent gas from such a pretreatment is then passed into the wet pulsed corona discharge process discussed above with the liquid phase being further subjected to bioremediation or another type of purification treatment. The gas phase produced from the above process is passed over a gaseous sorbent (absorbent and/or adsorbent) system such as activated charcoal and vented to the air or passed into an air stream of an incinerator or the like to eliminate vestigial VOC that may have escaped elimination in a previous step.

BRIEF DESCRIPTION OF THE DRAWINGS

Figure 1 is a simplified schematic representation of the pulsed wet corona system of the present invention.
Figure 2 is a graphical representation of experimental results for destruction and removal efficiency (DRE) with using methanol as a model VOC in which percentage DRE is shown on the ordinate and water flow rate [milliliters per minute ml/min)] is shown on the abscissa.
Figure 3 is a graphical representation of experimental results for DRE using acetone as a model VOC, in which results are depicted as in Fig. 2.
Figure 4 is a graphical representation comparing the annualized costs in thousands of dollars (k$) versus plasma processing costs (watt-hours/cubic meter) for the present invention and a regenerative thermal oxidizer (RTO) of the prior art.

The present invention has several benefits and advantages.
One benefit is that high levels of VOC elimination efficiency can be obtained at relatively low start-up and running costs.
An advantage of the invention is that the products produced by the pulsed corona discharge reaction on the VOC are typically more soluble than are many of the VOC so that those materials can be more readily dissolved in the water flow that is used.
Another benefit of the invention is that the method and apparatus utilized are adaptable to being utilized with other air and water purification systems or methods.
Still further benefits and advantages of the invention will be apparent form the discussion that follows.

DETAILED DESCRIPTION OF THE INVENTION

A new method has been developed that combines the corona discharge with the scrubber to provide a "wet" corona discharge. [Fridman et al., 199th Meeting of the Electrochemical Society, Washington, March 25-29, 2001; Meeting Abstracts, Vol. 2001-1, Abstract No. 196; and Sobacchi et al., 15th International Symposium on Plasma Chemistry, Orleans, July 9-13, 2001, Symposium Proceedings, Vol. VII: Poster Contributions, pp. 3135-3140; Sobacchi, "Hydrocarbon Processing in Non-Equilibrium Gas Discharges", Master of Science Thesis, University of Illinois at Chicago, May 16, 2001; Kalashnikov, "Non-Equilibrium Gliding Arc And Corona Discharges For Abatement Of Volatile Organic Compounds", Doctoral Thesis, University of Illinois at Chicago, June 26, 2002.]
To obtain desirable VOC destruction with low energy consumption it is necessary to make proper design of pulsed corona discharge and scrubber. This method is applicable to substantially any existing waste gas stream that emanates from an industrial site such as a metal cleaning and plating, paint manufacturing, plastics manufacturing, petroleum refining and dye-making site that also includes a wastewater treatment facility for treating a waste water stream from a source other than the pulsed corona discharge.
The present invention contemplates a method for treating exhaust gas streams that contain one or more volatile organic compounds (VOC) to abate those VOCs. Illustrative exhaust gas streams include, without limitation, those streams produced by papermaking, metal cleaning and plating, paint manufacturing, plastics manufacture, petroleum refining, dye-making and the like industries. In particular, a contemplated method is particularly useful in abating VOC produced in papermaking processes such as brownstock and oriented strandboard production (whose VOC are similar to those of papermaking), and particularly from the vents streams and dryer exhausts used in those processes.
A contemplated method for abatement of VOCs in an exhaust gas stream comprises passing an exhaust gas stream containing about 60 to about 6000 ppm VOC through a pulsed corona discharge chamber in the presence of a spray of water droplets or a flowing film of water to form one or more oxidation products that dissolve in the water spray droplets or film and provide an effluent water stream and an effluent gas stream. In the method, a contemplated pulsed corona discharges at a rate of about 0.01 to about 2 kHz, and more preferably about 0.1 to about 1 kHz. The ratio of the water spray or flow rate to the exhaust gas flow is about 0.2 to about 2 milliliters/minute at one standard liter per minute of exhaust gas flow, and an expenditure of not more than 50 eV per molecule of VOC is utilized. This method provides a destruction and removal efficiency of about 90 percent or more, to about 99 percent or more, thereby abating the VOC.
The method can operate at substantially any temperature with the understanding that lower temperatures typically provide slower reaction rates, as is usually the case for chemical reactions. More typical temperatures of the exhaust gas stream are about 103˚ F (about 40˚C) to about 150˚ F (about 65˚ C). Such temperatures are determined prior to entry into the pulsed corona discharge apparatus.

More usual and preferred VOC levels are about 200 to about 4200 ppm. More preferably still, those VOC levels are about 300 to about 3000 ppm.

Specific values of the water spray or flow rate and the exhaust gas flow volume can differ from one apparatus and gas stream to another. However, the ratio of water spray or flow rate to the exhaust gas flow is relatively constant at about 0.2 to about 2 milliliters/minute at one standard liter per minute (SLM) of exhaust gas flow. Thus, for wet corona discharge systems larger than that used illustratively herein, the water spray or flow rate can be on the order of gallons, liters or kiloliters per minute, with an accompanying increase in gas stream flow so that the ratio of the two corresponds to that noted above.

The contemplated method is illustrated herein in relation to a papermaking facility. The illustrative target exhaust gas streams for this invention such as high volume low concentration (HVLC) brownstock washer vent emissions can contain various VOCs in varying concentrations, as are seen in Table I, below.

Table I

| Emitted VOC component | HVLC Brownstock Washer Vent Emissions according NCASI* | "worst case scenario" HVLC Brownstock Washer Vent Emissions suggested by GP** |
|---|---|---|
| Dimethyl Disulfide | 2 ppm | 20 ppm |
| Dimethyl Sulfide | - | 1727 ppm |
| Methanol | 83 ppm | 2330 ppm |
| Acetone | 3 ppm | - |
| Terpenes | 209 ppm | 62 ppm |
| Process Conditions | | |
| Temperature | 103˚F | 150˚F |
| Relative Humidity | 100% | 100% |
| *NCASI = National Council for Air and Stream Improvement **GP = Georgia Pacific | | |

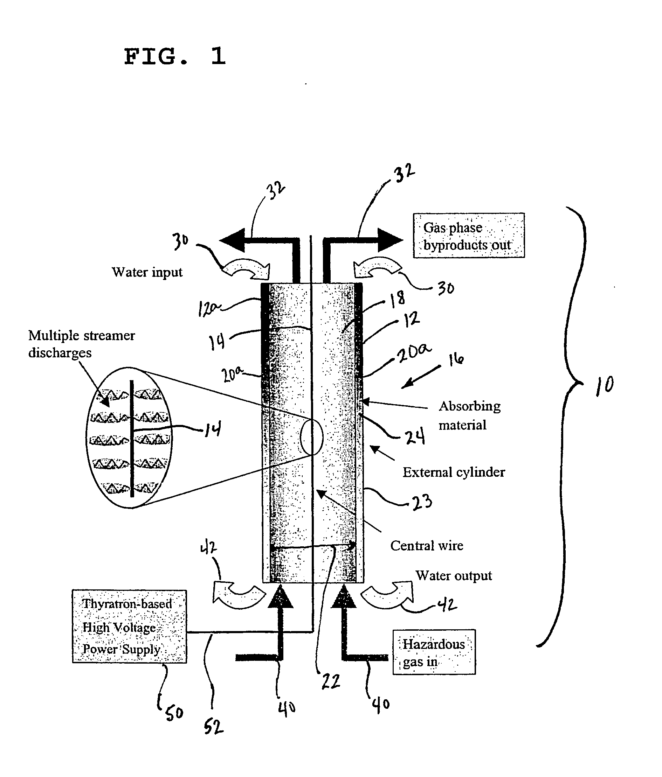

In the simplest case (shown schematically in Fig. 1) the wet corona setup permits for a water film to flow on the internal walls of the reactor. In a larger scalable geometry a water spray can be used instead of water film. Thus, the flow of water is scalable based on the size of the apparatus used, the VOC present in the exhaust gas, the volume of gas flow and other known or readily determined parameters that are associated with Henry's law and the equations discussed hereinafter.

While the present invention is susceptible of embodiment in various forms, there is shown in the drawings a number of presently preferred embodiments that are discussed in greater detail hereafter. It should be understood that the present disclosure is to be considered as an exemplification of the present invention, and is not intended to limit the invention to the specific embodiments illustrated.

Referring to the drawings, a wet pulse corona discharge system 10 is schematically represented in Fig. 1. That figure shows a reactor 12 having internal walls 12a over which a water film is permitted to flow. It will be understood by persons having skill in the art that in a larger scalable geometry a water spray can be used instead of a flow, without departing from the novel scope of the present invention. A corona discharge wire 14 is provided within reactor 12. The reactor 12 and wire 14 create a wire-into-cylinder coaxial electrode system 16. The inner, high voltage electrode 14 is, in a preferred embodiment, a 0.5 mm diameter Inconel® wire. The Inconel® alloy is selected for its superior heat and oxidation resistance. It will, however, be understood that other alloys or single metallic element wires, can be used without departing from the novel scope of the present invention.

The reactor vessel 12 creates an external electrode 18, made up, in a preferred embodiment of the present invention, of a 60 cm long cylindrical glass tube 20 with an internal diameter 22, in a preferred embodiment the diameter is 22.2 mm, surrounded by a sheet of perforated metal 23. The internal wall 20a of the glass tube 20 is covered by a layer of absorbing material 24, which forms a uniformly distributed water film in the reactor 12.

The tube 20 is held, in a preferred embodiment, at the top by a Teflon® holder (not shown) and at the bottom by a stainless steel holder (not shown); stainless steel is preferred for the bottom of the reactor to prevent deterioration of the holder itself due to the byproducts expected in the liquid phase, such as sulfuric acid. It will be understood that different materials can be utilized, both for the top and the bottom, without departing from the novel scope of the present invention. Further, it will be understood that either one or both of the materials noted above can be used either together or in other combinations without departing from the novel scope of the present invention. Preferably, materials having similar qualities, such as non-sticking and oxidation and reactivity free materials will be used for the materials of the top and bottom of the reactor.

The reactor 12 is sealed, in a preferred, by means of silicon O-rings (not shown).Although silicone O-rings are used in a preferred embodiment, it will be understood that O-rings of other materials, including rubber and plastic, can be used without departing from the novel scope of the present invention. The top holder (not shown) comprises the connections of the lines, which are schematically shown in Fig. 1, for the incoming water 30 and the outgoing (effluent) gas 32. In a preferred embodiment, water is introduced into the reactor 12 through sixteen, equally spaced holes with a diameter of $^1/_{32}$" (about 0.8 mm), to provide a uniform injection around the circular tube. It will be understood that any number of equally spaced holes, of various suitable diameters (either uniformly of the same diameter or of different diameters with suitable results) can be used to provide a uniform injection of water, without departing from the novel scope of the present invention.

The top holder (not shown) also contains the connection for the internal, high voltage electrode 14 and for the high voltage probe (shown schematically in Fig. 1). The bottom holder (not shown) includes threaded holes for the gas inlet 40 and for the water outlet (effluent) 42 (shown schematically in Fig. 1). To avoid any contact between this metal holder (not shown) and the high voltage (HV) electrode 14 and to prevent the formation of sparks, the wire 14 can be fixed to the holder (not shown) through a Teflon® insert (not shown), which completely contains the lower portion of the wire. As noted above, the type of insert described is a preferred embodiment and is not meant to limit the scope of the present invention.

Power is supplied, in a preferred embodiment, to the plasma source by a thyratron-based power supply 50, with 100 kΩ internal resistance and no-load voltage values from 0 to 20 kV. It will be understood that similar power supplies, having desirable power producing capabilities, can be utilized without departing from the novel scope of the present invention. In the preferred embodiment, pulses of about 100 ns duration and 10 ns rise time are applied and are transmitted to the central wire electrode 14 by means of a 50 Ω high-voltage, coaxial cable 52. The power of the plasma source is varied from 1 to 20 W by controlling the high voltage pulse amplitude and the pulse frequency, which could range from 0.01 to 2 kHz. Voltage is measured using a high voltage probe (not shown) such as model P6015A 1000X by Tektronik Inc., current measurements are performed, in a preferred embodiment, using a standard current monitor such as current monitor #411 by Pearson Inc.

In the operation of the reactor 12 of the present invention, an electrode 14 is placed within glass tube 20, water is input into the system in such a manner that a film of water forms on the internal walls 12a of the reactor 12, simultaneously an exhaust gas stream containing VOC is introduced and the electrode is charged. The result includes the oxidation of VOC, their dissolution in the flowing water effluent and the release of gas phase byproducts in the gas effluent.

Correct choice of parameters should be based on theoretical estimations or experimental results. The solubility of a gas in water is described by the Henry's law, which states a relation between the concentrations of a gas in the liquid and in the gas phases. Usually, the Henry's law constant $k_H$ is defined as:

$$k_H = \frac{c_a}{p_g} \tag{1}$$

Here, $c_a$ is the concentration of a species in the aqueous phase and $p_g$ is the partial pressure of that species in the gas phase. The commonly used unit for the Henry constant is:

$$\left[\frac{M}{atm}\right] = \left[\frac{mol_{aq}/m^3_{aq}}{atm}\right] \tag{2}$$

The higher the value of the Henry's law constant for a given compound, the higher the solubility of that compound in water. Values of the Henry's law constants for the VOCs of interest are shown in Table II, below. Oxidized compounds such as methanol, acetone and the intermediate byproducts from the oxidation of dimethylsulfide and α-pinene (that are the main substances from terpenes in HVLC brownstock washer vent emissions) appear to have a much higher solubility than the non-oxidized species.

Table II

| Henry's law constant values in standard conditions | |
|---|---|
| Volatile Organic Compound | $k_H^{\ominus} \left[ \dfrac{M}{atm} \right]$ |
| Methanol $CH_3OH$ | $2.2 \cdot 10^2$ |
| Acetone $CH_3COCH_3$ | $3.1 \cdot 10^1$ |
| Dimethyl Sulfide $CH_3SCH_3$ | $9 \cdot 10^{-1}$ |
| $\alpha$-Pinene $C_{10}H_{16}$ | $4.9 \cdot 10^{-2}$ |
| Butane $C_4H_{10}$ | $1.2 \cdot 10^{-3}$ |
| Sulfur Dioxide $SO_2$ | $1.2 \cdot 10^1$ |

The solubility of a gas in water depends on the temperature. In reference to standard conditions ($T^Q$=298.15 K), the Henry's constant is denoted as $k_H^{\ominus}$ .. Henry's law can be described as a function of temperature as:

$$k_H = k_H^{\ominus} \exp\left[ \frac{-\Delta_{soln} H}{R} \left( \frac{1}{T} - \frac{1}{T^{\ominus}} \right) \right] \qquad (3)$$

where $\Delta_{soln}H$ is the enthalpy of solution.

A quasi two-dimensional model of VOCs absorption into water was developed. The model is based on the solution of the species conservation equations for the gas phase and for the liquid phase. It yields to the following expression for the destruction and removal efficiency (DRE):

$$DRE = \frac{(1-\alpha) \cdot e^{-\beta(1-\alpha)}}{1 - \alpha \cdot e^{-\beta(1-\alpha)}} \qquad (4)$$

where $\beta$ is the ratio between the convection time and the diffusion time and can be written as:

$$\beta = \frac{4\tau_c}{\tau_d} = \frac{\left( D/d^2 \right)}{\left( V_g/L \right)} \qquad (5)$$

with: D = diffusion coefficient in air;
d = electrode separation distance;
$V_g$ = velocity of the gas;
L = length of the wet corona reactor; and
$\alpha$ is a ratio between gas and liquid flow rate that is expressed as:

$$\alpha = \frac{Q_g}{Q_w V_{mol} k_H} \qquad (6)$$

with: $Q_g$ = gas flow rate;
$Q_w$ = water flow rate;
$V_{mol}$ = gas volume per unit mole.

D and $k_H$ are the only parameters related to the specified compound whose removal is being analyzed; the other factors describe the geometry of the reactor (d and L) and the experimental conditions (Vg, $Q_g$ and $Q_w$).

With the assumption, which holds true if wet corona design is made appropriate, that the convection time is much longer than the diffusion time, i.e. β>>1, α becomes the critical parameter: for α >1, the DRE is very low, whereas for α <1 high values of DRE are obtained. Because the gas flow rate is fixed for particular technology stream and $V_{mol}$ and $k_H$ are constant in standard conditions, assuming α = α $_{crit}$=1, a critical value for the water flow rate can be derived as:

$$Q_{w-crit} = \frac{Q_g}{V_{mol} k_H} \qquad (7)$$

Only a flow rate higher than this critical value provides a high removal of a given substance by absorption into the water film. This theoretical analysis shows good agreement with the experimental results presented below.

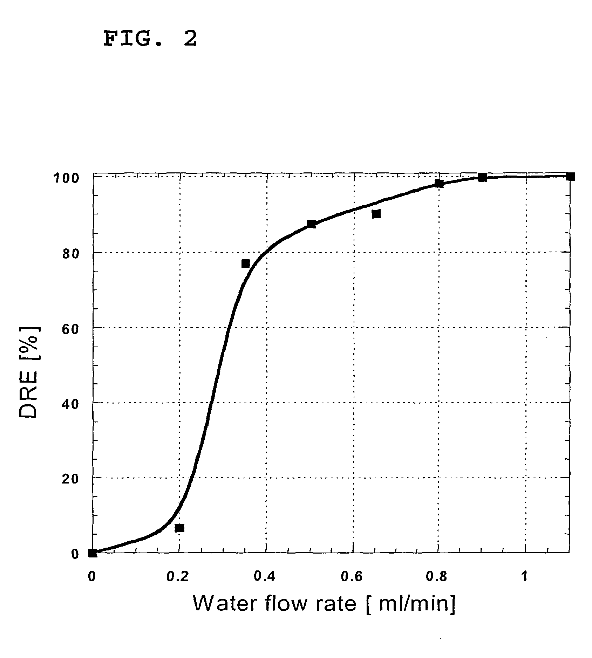

Methanol removal by absorption into water was studied in the wet corona reactor. An initial concentration equal to 200 ppm of methanol was considered. Methanol is the most soluble among the organic compounds of interest, as Table II shows. The value of the critical water flow rate for absorbing methanol was calculated from the model to be $Q_{w-crit}$ about 0.2 ml/min, in good agreement with the experimental results shown in Fig. 2. For a fairly low flow rate of the water film (about 0.9 ml/min), the DRE is almost complete (about 99.9%), suggesting that an optimal configuration in terms of the geometry of the reactor and of the ratio between gas and liquid flow rate has been obtained for the removal of methanol.

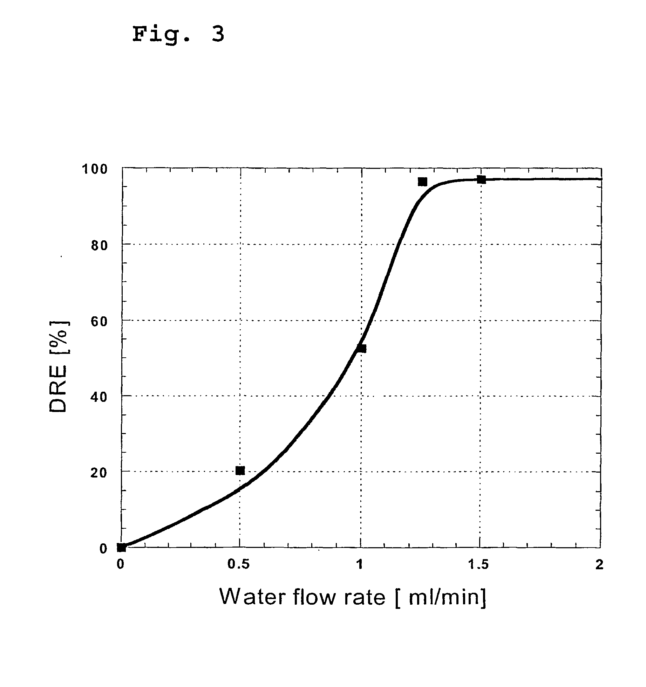

Acetone removal by absorption into water was studied for flow rate of the water film varying from zero to about 2 ml/min. The initial concentration of acetone in the gas stream was 200 ppm. For acetone, with a 1 SLM gas flow rate, the calculated value of the critical water flow rate is $Q_{w-crit}$ about 1.3 ml/min, higher than for methanol, given the lower solubility in water; experimental results, presented in Fig. 3, show good agreement with the theoretical calculations. A high removal efficiency (about 99%) can be reached using a fairly low water flow rate (about 2 ml/min).

Thus, absorption into water of compounds with high Henry's law constants, such as methanol and acetone, appears to be a very feasible solution given the low water flow rate required, which is, by weight, comparable to the gas flow rate or even lower; absorption is economically practical for the removal of these compounds from industrial gas streams when water is readily available (as in the case of the paper industry).

In accordance with a method of the invention, substantially all soluble VOC components, like methanol or acetone, are removed from the stream by water, and the only one radical OH produced by the pulsed corona discharge is used for treatment of one molecule of insoluble VOC, like dimethylsulfide.

Molecules of insoluble VOCs are non-polar; this is a reason of their very low solubility. After the interaction of OH radical with the molecule of insoluble VOC, this molecule transforms into a new molecule or radical, which is polar and more soluble. Then this more soluble substance is removed by the water stream of the scrubber. As a result not more than 50 eV per molecule of VOC is spent, and this system is applicable for the waste stream with higher level of contamination (about 200 ppm of insoluble VOC and any reasonable level of soluble VOC).

For example, in this system, one need only spend 10 W-Hour/$m^3$ for the waste gas treatment to reach 90% DRE for the case of the next VOC composition (Table 3).

Table 3

| Gas composition tested in study | |
| --- | --- |
| Ingredient | VOC content (ppm) |
| Dimethyl Sulfide | 50 |
| Methanol | 200 |
| Acetone | 200 |
| α-Pinene | 50 |

During this study, the gas flow rate was 1 SLM, and water flow rate was 1.5 ml/min.

Usually, the radicals being dissolved in the water produce acidic solutions (pH < 7). Additionally, ozone molecules from the corona discharge also dissolve in the pulsed corona water flow to make it more acidic. As a result, the corona device is built from the materials that are stable to acidic solution: stainless steel, plastics, glass, carbon materials, and the like.

One basis for the application of the present invention to exhaust gases of paper industry or a similar industry is the presence of a huge amount of wastewater in this industry. As a result, a small amount of wastewater provided from the pulsed corona water flow does not create a problem; i.e., the pulsed corona wastewater flow can be mixed with the existing wastewater and the mix can be treated later according to the existing techniques. If at the particular plant the main wastewater is alkaline (pH > 7), an interaction of the pulsed corona wastewater with the main wastewater stream results in oxidation of the remaining dissolved VOC into $H_2O$ and $CO_2$; i.e., in the waste mix water cleaning.

If the particular plant has the wastewater that is of such quality that it can be used in spray systems and does not produce considerable amount of VOCs during spraying, this wastewater can be used in the corona discharge apparatus.

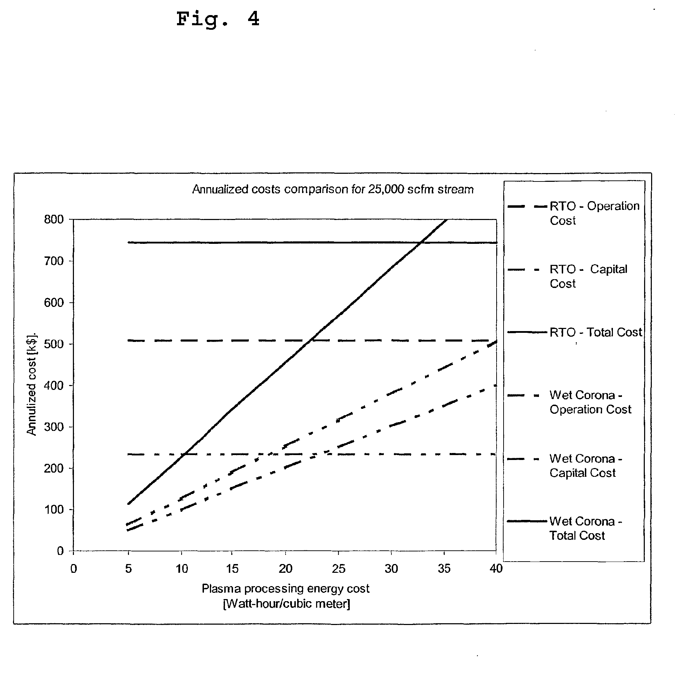

Currently, the regenerative thermal oxidizers (RTO) are used for VOC treatment in the paper industry [see, Harkness et al., NCASI Technical Bulletin No. 795, September (1999)]. These devises are very good for a high level of contamination, when VOC oxidation provides a substantial amount of energy. Otherwise, a lot of natural gas should be used for RTO operation. Other disadvantages of RTO are the $SO_2$ emission in the typical case of sulfur-contained VOC and cyclic operation resulting in cracking of the ceramic parts of RTO and high capital and operation expenses. The technology described herein is believed to be economical reasonable in the case of low energy consumption as can be seen from the annualized cost comparison between the Wet Corona and RTO processes shown in Fig. 4.

The use of the article "a" or "an" is intended to include one or more.

From the foregoing, it will be observed that numerous modifications and variations can be effected without departing from the scope of the present invention. It is to be understood that no limitation with respect to the specific examples presented is intended or should be inferred. The disclosure is intended to cover by the appended claims modifications as fall within the scope of the claims.

**Claims**

1. A method for abatement of volatile organic compounds (VOC) in an exhaust gas stream that comprises
   passing an exhaust gas stream through a pulsed corona discharge chamber in the presence of a spray of water droplets or a flowing film of water to form one or more oxidation products that dissolve in the water spray droplets or flowing film to thereby provide an effluent water stream and an effluent gas stream, wherein

   (a) said pulsed corona discharges at a rate of about 0.01 to about 2 kHz,
   (b) the ratio of the water spray or flow rate to the exhaust gas flow is about 0.2 to about 2 milliliters/minute at one standard liter per minute of exhaust gas flow, and
   (c) an expenditure of not more than 50 eV per molecule of VOC is utilized, said method providing a destruction and removal efficiency of about 90 percent or more, thereby abating said VOC.

2. The method according to Claim 1 wherein said pulsed corona discharges at a rate of about 0.1 to about 1 kHz.

3. The method according to Claim 1 wherein said exhaust gas stream contains about 60 to about 6000 ppm VOC.

4. The method according to Claim 1 wherein said exhaust gas stream is that produced from a process selected from the group consisting of papermaking, metal cleaning or plating, paint manufacturing, plastics manufacture, petroleum refining and dye-making.

5. The method of Claim 1, used to abate VOC from the exhaust gas stream of a process selected from the group consisting of papermaking, metal cleaning or plating, paint manufacturing, plastics manufacture, petroleum refining and dye-making and, wherein the exhaust gas stream contains about 60 to about 6000 ppm VOC.

6. The method according to Claim 5 wherein said method is carried out at an exhaust stream temperature of about 40 C to about 65 C.

7. The method according to Claim 5 wherein said exhaust stream contains about 200 to about 4200 ppm VOC.

8. The method according to Claim 5 wherein said exhaust stream is produced from a papermaking process.

9. The method of Claim 1, used to abate VOC from an exhaust gas stream at a temperature of about40 C to about 65 C produced from a papermaking process that contains about 200 to about 4200 ppm VOC, said method providing a destruction and removal efficiency of about 90 percent or more, thereby abating said VOC.

10. The method according to Claim 9 wherein said exhaust stream contains about 300 to about 3000 ppm VOC.

11. The method according to Claim 9 wherein said removal efficiency is about 99 percent or more.

12. The method according to Claim 9 wherein said papermaking process is brownstock or oriented strandboard production.

13. The method according to Claim 9including the further step of admixing the effluent water stream containing oxidized VOC with another waste water stream.

14. The method according to Claim 9 wherein the water of said water spray is provided from waste water of said papermaking process.


**Patentansprüche**

1. Verfahren zur Verringerung flüchtiger organischer Verbindungen (VOC) in einem Abgasstrom, bei dem man einen Abgasstrom durch eine gepulste Koronaent ladungskammer in Gegenwart eines Wassertröpfchensprühs oder eines fließenden Wasserfilms leitet, um ein oder mehrere Oxidationsprodukte zu bilden, die sich in den Wassersprühtröpfchen oder dem fließenden Film unter Bildung eines Abwasserstromes und eines Abgasstroms lösen, wobei

   (a) die gepulste Korona sich mit einer Frequenz von etwa 0,01 bis etwa 2 kHz entlädt,
   (b) das Verhältnis der Sprüh- oder Fließgeschwindigkeit des Wassers zu dem Abgasstrom bei einem Normalliter Abgasstrom je Minute etwa 0,2 bis etwa 2 Milliliter/Minute ist und
   (c) ein Aufwand von nicht mehr als 50 eV je Molekül der VOC angewandt wird, wobei das Verfahren eine Vernichtungs- und Entfernungswirksamkeit von etwa 90 Prozent oder mehr ergibt und **dadurch** die VOC verringert wird.

2. Verfahren nach Anspruch 1, bei dem sich die gepulste Korona mit einer Frequenz von etwa 0,1 bis etwa 1 kHz entlädt.

3. Verfahren nach Anspruch 1, bei dem der Abgasstrom etwa 60 bis etwa 6000 ppm VOC enthält.

4. Verfahren nach Anspruch 1, bei dem der Abgasstrom aus einem Prozess anfällt, der aus der Gruppe ausgewählt, ist, die aus Papierherstellung, Metallreinigung oder -plattierung, Anstrichfarbenherstellung, Kunststoffherstellung, Petroleumraffinierung und Farbstoffherstellung besteht.

5. Verfahren des Anspruchs 1, das eingesetzt wird zur VOC-Verringerung aus dem Abgasstrom eines Verfahrens, das aus der Gruppe ausgewählt ist, die Papierherstellung, Metallreinigung oder -plattierung, Anstrichfarbenherstellung, Kunststoffherstellung. Petroleumraffinierung und Farbstoffherstellung besteht:, und bei dem der Abgasstrom etwa 60 bis etwa 6000 ppm VOC enthält.

6. Verfahren nach Anspruch 5, bei dem das Verfahren bei einer Abstromtemperatur von etwa 40 C bis etwa 65 C durchgeführt wird.

7. Verfahren nach Anspruch 5, bei dem der Abstrom etwa 200 bis etwa 4200 ppm VOC enthält.

8. Verfahren nach Anspruch 5, bei dem der Abstrom aus einem Papierherstellungsverfahren anfällt.

9. Verfahren des Anspruchs 1, das zur VOC-Entfernung aus einem aus einem Papierherstellungsverfahren angefallenen Abgasstrom bei einer Temperatur von etwa 40 C bis etwa 65 C eingesetzt wird, der etwa 200 bis etwa 4200 ppm VOC enthält, wobei das Verfahren eine Vernichtungs- und Entfernungswirksamkeit von etwa 90 Prozent oder mehr ergibt und **dadurch** die VOC verringert.

**10.** Verfahren nach Anspruch 9, bei dem der Abstrom etwa 300 bis etwa 3000 ppm VOC enthält.

**11.** Verfahren nach Anspruch 9, bei dem die Entfernungswirksamkeit etwa 99 Prozent oder mehr ist.

**12.** Verfahren nach Anspruch 9, bei dem das Papierherstellungsverfahren die Verstellung von Braunschliff oder von ausgerichtete Faserplatten ist.

**13.** Verfahren nach Anspruch 9 unter Einschluß der weiteren Stufe der Mischung des oxidierte VOC enthaltenden Abwasserstroms mit einem anderen Abwasserstrom.

**14.** Verfahren nach Anspruch 9, bei dem das Wasser des genannten Wassersprühs Abwasser genannten Papierherstellungsverfahrens bereitgestellt wird.

**Revendications**

**1.** Procédé de réduction de composés organiques volatiles (COV) dans un courant de gaz d'échappement, qui comprend :

le passage d'un courant de gaz d'échappement à travers une chambre à effet couronne pulsé en présence de gouttelettes d'eau pulvérisées ou d'un film d'eau en écoulement pour former un ou plusieurs produits d'oxydation qui se dissolvent dans les gouttelettes d'eau pulvérisées ou le film d'eau en écoulement pour ainsi fournir un courant d'effluent aqueux et un courant d'effluent gazeux,

dans lequel

(a) la fréquence dudit effet couronne pulsé est d'environ 0,01 à environ 2 kHz,
(b) le rapport entre le débit de pulvérisation d'eau ou d'écoulement et le flux du gaz d'échappement est d'environ 0,2 à environ 2 millilitres/minute pour un litre standard par minute de flux de gaz d'échappement, et
(c) une dépense d'au plus 50 eV par molécule de COV est utilisée, ledit procédé fournissant une efficacité de destruction et d'élimination d'environ 90 pour cent ou plus, pour ainsi réduire lesdits COV.

**2.** procédé selon la revendication 1, dans lequel la fréquence dudit effet couronne puisé est d'environ 0,1 à environ 1 kHz.

**3.** Procédé selon la revendication 1, dans lequel ledit courant de gaz d'échappement contient environ 60 à environ 6000 ppm de COV.

**4.** Procédé selon la revendication 1, dans lequel ledit courant de gaz d'échappement est celui produit par un procédé choisi dans le groupe constitué par la fabrication du papier, le nettoyage ou le placage des métaux, la fabrication des peintures, la fabrication des plastiques, le raffinage du pétrole et la fabrication des colorants.

**5.** Procédé selon la revendication 1, utilisé pour réduire les COV provenant d'un courant de gaz d'échappement issu d'un procédé choisi dans le groupe constitué par la fabrication du papier, le nettoyage ou le placage des métaux, la fabrication des peintures, la fabrication des plastiques, le raffinage du pétrole et la fabrication des colorants, et dans lequel le courant de gaz d'échappement contient environ 60 à environ 6000 ppm de COV.

**6.** Procédé selon la revendication 5, dans lequel ledit procédé est mené à une température de courant d'échappement d'environ 40 ˚C à environ 65 ˚C.

**7.** Procédé selon la revendication 5, dans lequel ledit courant d'échappement contient environ 200 à environ 4200 ppm de COV.

**8.** Procédé selon la revendication 5, dans lequel ledit courant d'échappement est produit dans un procédé de fabrication de papier.

**9.** Procédé selon la revendication 1, utilisé pour réduire les COV provenant d'un courant de gaz d'échappement à une température d'environ 40 ˚C à environ 65 ˚C produit dans un procédé de fabrication de papier, qui contient environ 200 à environ 4200 ppm de COV, ledit procédé fournissant une efficacité de destruction et d'élimination d'environ 90 pour cent ou plus, pour ainsi réduite lesdits COV.

10. Procédé selon la revendication 9, dans lequel ledit courant d'échappement contient d'environ 300 à environ 3000 ppm de COV.

11. Procédé selon la revendication 9, dans lequel ladite efficacité d'élimination est d'environ 99 pour cent ou plus.

12. Procédé selon la revendication 9, dans lequel ledit procédé de fabrication du papier est la production de pâte brune ou de panneaux de grandes particules orientées.

13. Procédé selon la revendication 9, comprenant l'étape supplémentaire de mélange du courant d'effluent aqueux contenant les COV oxydés avec un autre courant d'eau usée.

14. Procédé selon la revendication 9, dans lequel l'eau de ladite eau pulvérisée provient des eaux usées dudit procédé de fabrication de papier.

# FIG. 1

# FIG. 2

Figure showing DRE [%] versus Water flow rate [ml/min]

Fig. 3

Fig. 4

Annualized costs comparison for 25,000 scfm stream

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 36723102 P

**Non-patent literature cited in the description**

- **Lesueur et al.** *J. de Physique,* 1990, vol. 51, C557-C564
- **Raizer.** *Gas Discharge Physics, Berlin,* 1997
- **Pellerin et al.** *J. Physics D-Applied Physics,* 2000, vol. 33 (19), 2407-2419
- **Czernihowski et al.** *Acta Physica Polonica A,* 1996, vol. 89, 595-603
- **Mutaf-Yardimci et al.** *J. Applied Physics,* 2000, vol. 87, 1632-1641
- **Sobacchi, M.G.** Hydrocarbon Processing in Non-equilibrium Gas Discharges. *Master of Science Thesis,* 2001
- **Malik et al.** *Chinese J. Chem. Eng.,* 1999, vol. 7 (4
- **Masuda S et al.** Novel Plasma Chemical Technologies - PPCP and SPCP for Control of Gaseous Pollutants and Air Toxics. *Journal of Electrostatics,* May 1995, vol. 34 (4), 415-438
- **Fridman et al.** 199th Meeting of the Electrochemical Society, Washington. 25 March 2001
- *Meeting Abstracts,* vol. 2001-1 (196
- **Sobacchi et al.** 15th International Symposium on Plasma Chemistry, Orleans. *Symposium Proceedings,* 09 July 2001, vol. VII, 3135-3140
- **Sobacchi.** Hydrocarbon Processing in Non-Equilibrium Gas Discharges. *Master of Science Thesis,* 16 May 2001
- **Kalashnikov.** Non-Equilibrium Gliding Arc And Corona Discharges For Abatement Of Volatile Organic Compounds. *Doctoral Thesis,* 26 June 2002
- **Harkness et al.** *NCASI Technical Bulletin No. 795,* September 1999